# EUROPEAN PATENT APPLICATION

(11) **EP 3 490 104 A1**
(43) Date of publication of application: **29.05.2019**
(21) Application number: 17843842.0
(22) Date of filing: 07.08.2017
(51) Int. Cl.: H02J 50/27, H02M 7/08, H03M 1/00, H02J 7/02, H04M 1/02, H04M 1/725, H02J 50/40, H02J 50/12

(54) **ELECTRONIC DEVICE FOR RECEIVING POWER WIRELESSLY AND CONTROL METHOD THEREOF**

(30) Priority: 23.08.2016 US 201662378315 P; 14.11.2016 KR 20160150917
(71) Applicant: Samsung Electronics Co., Ltd., Suwon-si, Gyeonggi-do 16677 (KR)
(72) Inventor: PARK, Jae-Seok, Suwon-si, Gyeonggi-do 16677 (KR); RYU, Young-Ho, Suwon-si, Gyeonggi-do 16677 (KR)
(74) Representative: Gulde & Partner
(86) International application number: PCT/KR2017/008514
(87) International publication number: WO 2018/038422

(57) **Abstract**

An electronic device according to various embodiments of the present disclosure may comprise: a power receiving circuit for wirelessly receiving power from a wireless power transmission device; a plurality of rectifiers; and a processor for detecting the magnitude of the received power, selecting a rectifier to perform rectification from among the plurality of rectifiers based on at least in part on the magnitude of the received power, and controlling to rectify the received power by means of the selected rectifier.

## Description

### [Technical Field]

The present disclosure relates to electronic devices wirelessly receiving power and methods for controlling the same.

### [Background Art]

Portable digital communication devices have become required items for modern people. Customers desire to receive various high-quality services anytime and anywhere. The recent development of internet of things (IoT) technology bundles various sensors, home appliances, and communication devices up into a network. A diversity of sensors may require a wireless power transmission system for seamless operations.

Wireless power transmission may come in various types, such as magnetic induction, magnetic resonance, and electromagnetic waves. The electromagnetic wave type may advantageously work for remote power transmission as compared to magnetic induction and magnetic resonance.

The electromagnetic wave transmission scheme is primarily intended for remote power transmission and the location of remote electronic devices must be determined to deliver power in an efficient manner.

The above information is presented as background information only to assist with an understanding of the present disclosure. No determination has been made, and no assertion is made, as to whether any of the above might be applicable as prior art with regard to the present disclosure.

### [Detailed Description of the Invention]

### [Technical Problem]

Aspects of the present disclosure are to address at least the above-mentioned problems and/or disadvantages and to provide at least the advantages described below. Accordingly, an aspect of the present disclosure is to provide an electronic device for wirelessly receiving power and methods for controlling the same.

The electromagnetic wave type can perform charging at a relatively high efficiency if the electronic device may be positioned exactly, but at a relatively low efficiency if the location of the electronic device is inaccurate. Thus, if the location of the electronic device frequently changes, the magnitude of power that the electronic device receives from the wireless power transmitter may vary.

An electronic device may support a plurality of wireless charging schemes. For example, the electronic device may include a circuit to receive power for resonance-type charging and a circuit to receive power for electromagnetic wave-type charging. A difference in the magnitude of received power may occur between when charging is performed in the resonance scheme and when charging is performed in the electromagnetic wave scheme.

As described above, the magnitude of power that an electronic device receives may significantly vary for various reasons. Meanwhile, an electronic device may rectify alternating current (AC) power received into direct current (DC) power. The efficiency of a rectifier in an electronic device may be relatively high when the magnitude of power inputted is within a particular range. However, when the magnitude of power is not within the particular range, the rectification efficiency may be relatively low. When the magnitude of power inputted to the rectifier significantly varies, the efficiency of the rectifier also varies, making it difficult to obtain a relatively high efficiency.

### [Technical Solution]

In accordance with an aspect of the present disclosure, an electronic device is provided. The electronic device includes a power receiver circuit configured to wirelessly receive power from a wireless power transmitter, a plurality of rectifiers, and a processor configured to detect a magnitude of the received power, select a rectifier to perform rectification from among the plurality of rectifiers based on the magnitude of the received power, and control the selected rectifier to rectify the power.

In accordance with another aspect of the present disclosure, a method for controlling an electronic device is provided. The method includes wirelessly receiving power from a wireless power transmitter, detecting a magnitude of the received power, selecting a rectifier to perform rectification from among a plurality of rectifiers based at least in part on the magnitude of the received power, and rectifying the power using the selected rectifier.

### [Advantageous Effects]

Other aspects, advantages, and salient features of the disclosure will become apparent to those skilled in the art from the following detailed description, which, taken in conjunction with the annexed drawings, discloses various embodiments of the present disclosure.

### [Brief Description of Drawings]

The above and other aspects, features, and advantages of certain embodiments of the present disclosure will be more apparent from the following description in conjunction with the accompanying drawings, in which:
FIG. 1 is a view illustrating a wireless power transmission system according to an embodiment of the present disclosure;
FIG. 2 is a view illustrating various locations of an electronic device according to an embodiment of the present disclosure;
FIG. 3 is a graph illustrating the efficiency of a rectifier according to an embodiment of the present disclosure;
FIG. 4 is a block diagram illustrating an electronic device according to an embodiment of the present disclosure;
FIG. 5 is a flowchart illustrating a method for controlling an electronic device according to an embodiment of the present disclosure;
FIG. 6 illustrates graphs indicating the efficiency of rectifiers according to an embodiment of the present disclosure;
FIG. 7 is a graph illustrating a radio frequency (RF)-direct current (DC) conversion efficiency for the magnitude of input power in an electronic device according to an embodiment of the present disclosure;
FIGS. 8A, 8B, 8C, and 8D are circuit diagrams illustrating various rectifiers according to various embodiments of the present disclosure;
FIGS. 9A. 9B, 9C, 9D, 9E, 9F, and 9G are block diagrams illustrating electronic devices according to various embodiments of the present disclosure;
FIG. 10 is a flowchart illustrating a method for controlling an electronic device according to an embodiment of the present disclosure;
FIG. 11 is a flowchart illustrating operations of a wireless power transmitter and an electronic device according to an embodiment of the present disclosure;
FIGS. 12A and 12B are views illustrating formation of a RF wave by a wireless power transmitter according to an embodiment of the present disclosure;
FIG. 13 is a flowchart illustrating operations of an electronic device and a wireless power transmitter according to an embodiment of the present disclosure;
FIGS. 14A and 14B are views illustrating the formation of a RF wave by a wireless power transmitter according to an embodiment of the present disclosure;
FIGS. 15A and 15B are views illustrating a method for detecting an obstacle according to an embodiment of the present disclosure;
FIG. 16 is a flowchart illustrating a method for detecting an obstacle according to an embodiment of the present disclosure;
FIG. 17 is a flowchart illustrating a method for detecting an obstacle according to an embodiment of the present disclosure; and
FIGS. 18A and 18B are flowcharts illustrating operations of a wireless power transmitter and an electronic device according to an embodiment of the present disclosure.

### [Mode for Carrying out the Invention]

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural references unless the context clearly dictates otherwise. Thus, for example, reference to "a component surface" includes reference to one or more of such surfaces.

As used herein, the terms "A or B" or "at least one of A and/or B" may include all possible combinations of A and B. As used herein, the terms "first" and "second" may modify various components regardless of importance and/or order and are used to distinguish a component from another without limiting the components. It will be understood that when an element (e.g., a first element) is referred to as being (operatively or communicatively) "coupled with/to," or "connected with/to" another element (e.g., a second element), it can be coupled or connected with/to the other element directly or via a third element.

As used herein, the terms "configured to" may be interchangeably used with other terms, such as "suitable for," "capable of," "modified to," "made to," "adapted to," "able to," or "designed to" in hardware or software in the context. Rather, the term "configured to" may mean that a device can perform an operation together with another device or parts. For example, the term "processor configured (or set) to perform A, B, and C" may mean a generic-purpose processor (e.g., a central processing unit (CPU) or application processor (AP)) that may perform the operations by executing one or more software programs stored in a memory device or a dedicated processor (e.g., an embedded processor) for performing the operations.

For example, examples of the wireless power transmitter or electronic device according to various embodiments of the present disclosure may include at least one of a smartphone, a tablet personal computer (PC), a mobile phone, a video phone, an e-book reader, a desktop PC, a laptop computer, a netbook computer, a workstation, a server, a personal digital assistant (PDA), a portable multimedia player (PMP), a moving picture experts group (MPEG-1 or MPEG-2) audio layer-3 (MP3) player, a medical device, a camera, or a wearable device. The wearable device may include at least one of an accessory-type device (e.g., a watch, a ring, a bracelet, an anklet, a necklace, glasses, contact lenses, or a head-mounted device (HMD)), a fabric or clothes-integrated device (e.g., electronic clothes), a body attaching-type device (e.g., a skin pad), or a body implantable device. In some embodiments, examples of the wireless power transmitter or electronic device may include at least one of a television, a digital versatile disc (DVD) player, an audio player, a refrigerator, an air conditioner, a cleaner, an oven, a microwave oven, a washer, a drier, an air cleaner, a set-top box, a home automation control panel, a security control panel, a media box, a gaming console, an electronic dictionary, an electronic key, a camcorder, or an electronic picture frame.

According to an embodiment of the present disclosure, examples of the wireless power transmitter or electronic device may include at least one of various medical devices (e.g., diverse portable medical measuring devices (a blood sugar measuring device, a heartbeat measuring device, or a body temperature measuring device), a magnetic resource angiography (MRA) device, a magnetic resource imaging (MRI) device, a computed tomography (CT) device, an imaging device, or an ultrasonic device), a navigation device, a global navigation satellite system (GNSS) receiver, an event data recorder (EDR), a flight data recorder (FDR), an automotive infotainment device, an sailing electronic device (e.g., a sailing navigation device or a gyro compass), avionics, security devices, vehicular head units, industrial or home robots, drones, automatic teller's machines (ATMs), point of sales (POS) devices, or internet of things (IoT) devices (e.g., a bulb, various sensors, a sprinkler, a fire alarm, a thermostat, a street light, a toaster, fitness equipment, a hot water tank, a heater, or a boiler). According to various embodiments of the disclosure, examples of the wireless power transmitter or electronic device may at least one of part of a piece of furniture, building/structure or vehicle, an electronic board, an electronic signature receiving device, a projector, or various measurement devices (e.g., devices for measuring water, electricity, gas, or electromagnetic waves). According to various embodiments of the present disclosure, the wireless power transmitter or electronic device may be flexible or may be a combination of the above-enumerated electronic devices. According to an embodiment of the present disclosure, the wireless power transmitter or electronic device is not limited to the above-listed embodiments. As used herein, the term "user" may denote a human using the electronic device or another device (e.g., an artificial intelligent electronic device) using the wireless power transmitter or electronic device.

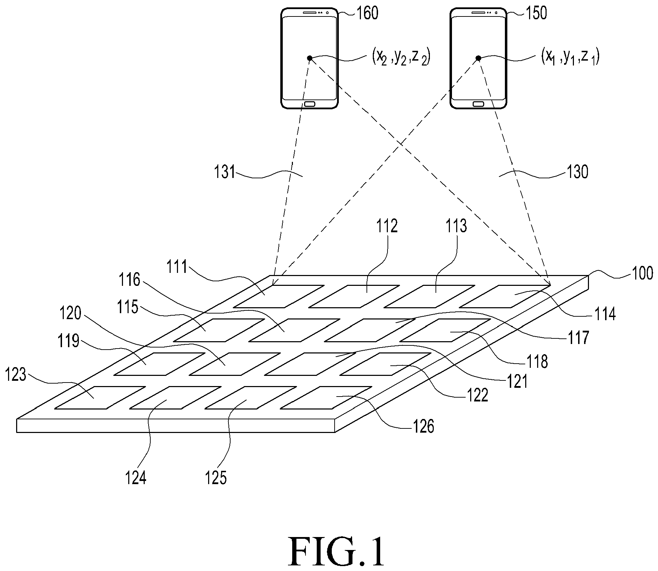

FIG. 1 is a view illustrating a wireless power transmission system according to an embodiment of the present disclosure.

Referring to FIG. 1, the wireless power transmitter 100 may wirelessly transmit at least one electronic device 150 or 160. According to an embodiment of the present disclosure, the wireless power transmitter 100 may include a plurality of patch antennas 111 to 126. The patch antennas 111 to 126 are not limited as long as they each are an antenna capable of generating radio frequency (RF) waves. At least one of the amplitude and phase of RF waves generated by the patch antennas 111 to 126 may be adjusted by the wireless power transmitter 100. For ease of description, the RF waves respectively generated by the patch antennas 111 to 126 are denoted sub-RF waves.

According to an embodiment of the present disclosure, the wireless power transmitter 100 may adjust at least one of the amplitude and phase of each of the sub-RF waves generated by the patch antennas 111 to 126. Accordingly, the sub-RF waves may interfere with each another. For example, the sub-RF waves may constructively interfere at one point or destructively interfere at another point. The wireless power transmitter 100 may adjust at least one of the amplitude and phase of each of the sub-RF waves so that the sub-RF waves may constructively interfere at a first point (x₁, y₁, z₁).

For example, the wireless power transmitter 100 may determine that an electronic device 150 is positioned at the first point (x₁, y₁, z₁). Here, the position of the electronic device 150 may be the position where, e.g., a power receiving antenna of the electronic device 150 is located. A configuration in which the wireless power transmitter 100 determines the position of the electronic device 150 is described below in greater detail. In order for the electronic device 150 to wirelessly receive power at a higher transmission efficiency, the sub-RF waves should constructively interfere at the first point (x₁, y₁, z₁). Accordingly, the wireless power transmitter 100 may control the patch antennas 111 to 126 so that the sub-RF waves may constructively interfere at the first point (x₁, y₁, z₁). For example, the patch antennas 111 to 126 may control the magnitude of signals inputted to the patch antennas 111 to 126 or control the phase (or delay) of signals inputted to the patch antennas 111 to 126. Meanwhile, beamforming, a technique for controlling RF waves to be subject to constructive interference at a certain point, would readily be appreciated by one of ordinary skill in the art. It is also appreciated by one of ordinary skill in the art that the beamforming used herein is not particularly limited in type. For example, various beamforming methods may be adopted as disclosed in U.S. Patent Application Publication No. 2016/0099611, U.S. Patent Application Publication No. 2016/0099755, and U.S. Patent Application Publication No. 2016/0100124. A RF wave formed by beamforming may be denoted a pocket of energy.

Hence, a RF wave 130 formed by the sub-RF waves may have the maximum amplitude at the first point (x₁, y₁, z₁), and thus, the electronic device 150 may receive power at a higher efficiency. The wireless power transmitter 100 may detect that an electronic device 160 is positioned at a second point (x₂, y₂, z₂). The wireless power transmitter 100 may control the patch antennas 111 to 126 so that the sub-RF waves may constructively interfere at the second point (x₂, y₂, z₂) to charge the electronic device 160. Hence, a RF wave 131 formed by the sub-RF waves may have the maximum amplitude at the second point (x₂, y₂, z₂) to receive power at a higher efficiency.

For example, the electronic device 150 may be positioned at a right side with respect to the wireless power transmitter 100. In this case, the wireless power transmitter 100 may apply a larger delay to sub-RF waves formed by the right-side patch antennas (e.g., 114, 118, 122, and 126). In other words, a predetermined time after the sub-RF waves are formed by the left-side patch antennas (e.g., 111, 115, 119, and 123), sub-RF waves may be generated by the right-side patch antennas (e.g., 114, 118, 122, and 126). Thus, the sub-RF waves may simultaneously meet at the electronic device 150. In other words, the sub-RF waves may constructively interfere at the right-side point. When beamforming is conducted at a middle point, the wireless power transmitter 100 may apply substantially the same delay to the left-side patch antennas (e.g., 111, 115, 119, and 123) and the right-side patch antennas (e.g., 114, 118, 122, and 126). Further, when beamforming is conducted at a left-side point, the wireless power transmitter 100 may apply a larger delay to the left-side patch antennas (e.g., 111, 115, 119, and 123) than to the right-side patch antennas (e.g., 114, 118, 122, and 126). Meanwhile, according to an embodiment of the present disclosure, the wireless power transmitter 100 may substantially simultaneously generate sub-RF waves through all of the patch antennas 111 to 126 and may perform beamforming by adjusting the phase corresponding to the above-described delay.

As set forth above, the wireless power transmitter 100 may determine the position of the electronic devices 150 and 160 and enable the sub-RF waves to constructively interfere at the determined position, allowing for wireless charging at a higher transmission efficiency. Meanwhile, the wireless power transmitter 100 may be capable of high-transmission efficiency wireless charging only when it can exactly determine the position of the electronic devices 150 and 160.

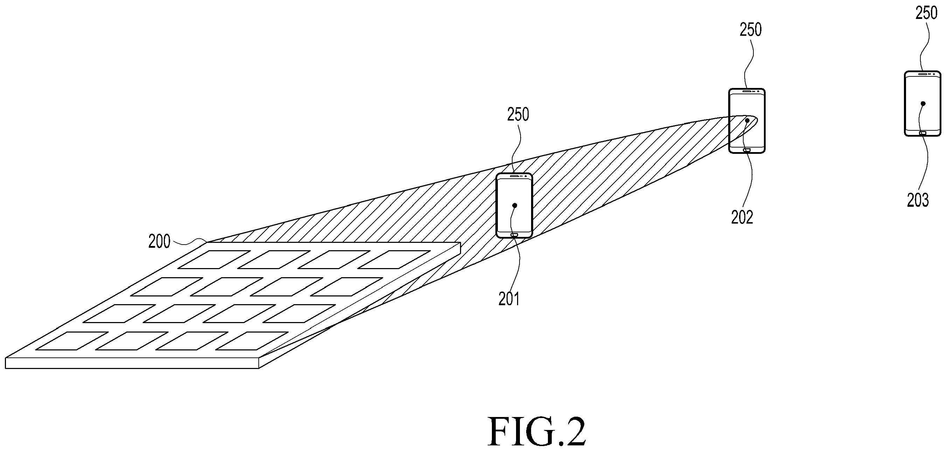

FIG. 2 is a view illustrating various locations of an electronic device according to an embodiment of the present disclosure.

Referring to FIG. 2, the electronic device 250 may be placed at various locations 201, 202, and 203 from a wireless power transmitter 200. When the wireless power transmitter 200 forms a predetermined RF) wave, the magnitude of power that the electronic device 250 receives may differ depending on the locations 201, 202, and 203. The magnitude of power that the electronic device 250 receives may be represented as at least one of the magnitude of the voltage of power inputted to, e.g., a rectifier, or the magnitude of the current. The magnitude of power may also be represented as the magnitude of the voltage that is output from the rectifier or the magnitude of the current, i.e., the voltage or current at the output terminal of the rectifier. The magnitude of power that the electronic device 250 receives may vary, which may influence the efficiency of the rectifier.

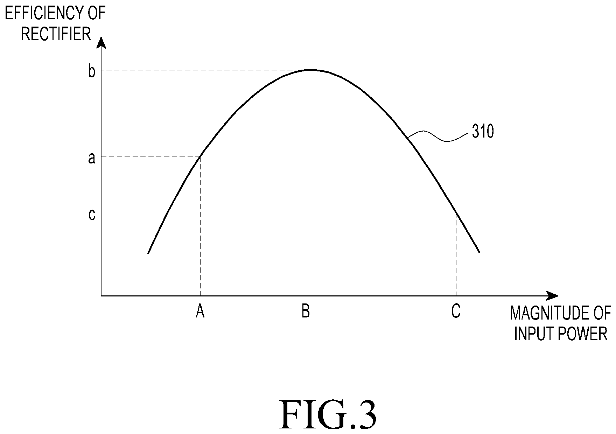

FIG. 3 is a graph illustrating the efficiency of a rectifier according to an embodiment of the present disclosure.

Referring to FIG. 3, the efficiency 310 of a rectifier may vary based on the magnitude of power provided to the rectifier. For example, the magnitude of power input when the electronic device 250 is at a first location 201 of FIG. 2 is A, the magnitude of power input when the electronic device 250 is at a second location 202 of FIG. 2 is B, and the magnitude of power input when the electronic device 250 is at a third location 203 of FIG. 2 is C. When the index indicating the magnitude of the received power input is voltage, the unit of A, B, and C may be volts (V). When the index indicating the magnitude of the received power input is current, the unit of A, B, and C may be amperes (A). Or, the unit of A, B, and C may be watts (W). A rectifier may rectify a power of magnitude A in which case the efficiency may be a, which may be a ratio of the magnitude of power input to the magnitude of power output. When the rectifier rectifies a power of magnitude B, the efficiency may be b, and when the rectifier rectifies a power of magnitude C, the efficiency may be c. When a relatively stable magnitude of power is provided, the rectifier may perform rectification at a relatively high efficiency. However, under such an environment when the magnitude of input power varies, the efficiency of the rectifier may vary as well. Thus, the rectifier may likely perform rectification at a lower efficiency. In particular, when the magnitude of input power varies based on the location of the electronic device 250 as shown in FIG. 2, a single rectifier cannot guarantee a high efficiency.

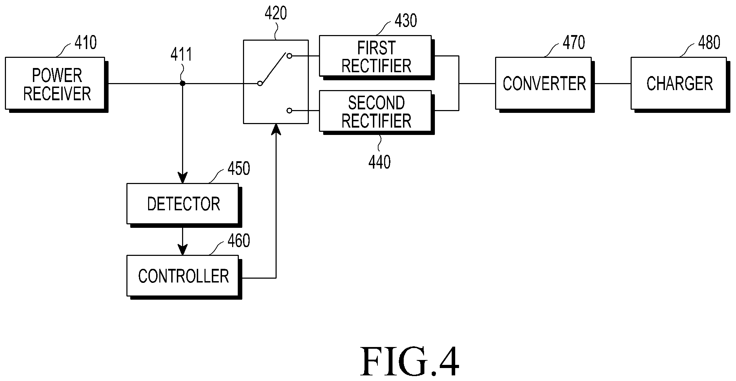

FIG. 4 is a block diagram illustrating an electronic device according to an embodiment of the present disclosure.

Referring to FIG. 4, the electronic device may include a power receiver 410, a switch 420, a first rectifier 430, a second rectifier 440, a detector 450, a controller 460, a converter 470, and a charger 480.

The power receiver 410 may wirelessly receive power from a wireless power transmitter and may be configured based on the transmission scheme of the wireless power. For example, when the electronic device supports the induction scheme, the power receiver 410 may include a secondary coil that is capable of generating an induced electromotive force using a magnetic field induced from a primary coil. When the electronic device supports the resonance scheme, the power receiver 410 may include a resonance circuit capable of generating a resonance using an electromagnetic wave. When the electronic device supports the electromagnetic wave scheme, the power receiver 410 may include at least one patch antenna capable of outputting an electrical signal using a RF wave. The electronic device may also support two or more wireless charging schemes. For example, the power receiver 410 may include a resonance circuit for supporting the resonance scheme and a patch antenna for supporting the electromagnetic wave scheme. The power receiver 410 may also include an antenna array having a plurality of patch antennas arrayed in two dimension (2D). The power receiver 410 may receive the wireless power and output alternating current (AC) power.

The detector 450 may detect the magnitude of the received power at the output terminal 411 of the power receiver 410. The detector 450 may include, e.g., a voltage meter for detecting the magnitude of voltage to the output terminal 411. According to an embodiment of the present disclosure, the voltage meter may be implemented in various types, such as an electrodynamic instrument voltage meter, an electrostatic voltage meter, or a digital voltage meter, without limited in type thereto. In another example, the detector 450 may include, e.g., a current meter capable of detecting the magnitude of current flowing to the output terminal 411. According to an embodiment of the present disclosure, the current meter may be implemented in various types, such as a direct current (DC) current meter, AC current meter, or digital current meter, without limited in type thereto. Accordingly, the detector 450 may detect the magnitude of the current or the magnitude of the voltage at the output terminal 411 and provide information about the detected magnitude of the voltage or current to the controller 460. As described above, the received magnitude of power may be represented as the magnitude of voltage or the magnitude of current, and, thus, the controller 460 may determine the magnitude of power wirelessly received based on the magnitude of voltage or current at the output terminal 411. According to an embodiment of the present disclosure, the detector 450 may also be implemented to be a comparator having a first input terminal to which a reference voltage is applied. In this case, the voltage from the output terminal 411 of the power receiver 410 may be applied to a second input terminal of the comparator. The reference voltage may be set to be a reference value by which a rectifier to perform rectification, of the first rectifier 430 and the second rectifier 440, may be selected. For example, the reference voltage may be set such that for power with a voltage not less than the reference voltage, the first rectifier 430 may perform rectification at a relatively high efficiency, and for power with a voltage less than the reference voltage, the second rectifier 440 may perform rectification at a relatively high efficiency. The controller 460 may receive a result of a comparison from the comparator and select a rectifier to perform rectification based on the result of the comparison. For example, when the result of the comparison shows that the voltage at the output terminal 411 is not less than the reference voltage, the controller 460 may select the first rectifier 430 to perform rectification. When the result of the comparison shows that the voltage at the output terminal 411 is less than the reference voltage, the controller 460 may select the second rectifier 440 as the rectifier to perform rectification. According to an embodiment of the present disclosure, the electronic device may also include three or more rectifiers. In this case, the detector 450 may include a plurality of comparators, and each of reference voltages respectively applied to the plurality of comparators may be set to discern the interval when the three or more rectifiers have a relatively high efficiency. The controller 460 may receive results of comparison from the plurality of comparators. The controller 460 may select a rectifier to perform rectification from among the three or more rectifiers based on the results of comparison.

The controller 460 may select a rectifier to perform rectification from among the plurality of rectifiers 430 and 440 based on the magnitude of power received. The efficiency of the first rectifier 430 for the magnitude of power inputted may differ from the efficiency of the second rectifier 440 for the magnitude of power inputted. For example, when the magnitude of the input power is within a first range, the first rectifier 430 may perform rectification at a relatively high efficiency. When the magnitude of the input power is within a second range, the second rectifier 440 may perform rectification at a relatively high efficiency. The first and second range may differ from each other and may be set to partially overlap each other or not to overlap each other. According to an embodiment of the present disclosure, the first rectifier 430 may rectify a relatively high magnitude of power at a high efficiency, and the second rectifier 440 may rectify a relatively low magnitude of power at a high efficiency. For example, the first rectifier 430 may rectify power with a magnitude not less than 1W and less than 1000W, i.e., a watt-class power, at a relatively high efficiency, and the second rectifier 440 may rectify power with a magnitude not less than 1mW and less than 1000mW, i.e., a milliwatt-class power, at a relatively high efficiency. The controller 460 may select a rectifier corresponding to the magnitude of input power. For example, when the magnitude of power inputted is 500mW, the controller 460 may select the second rectifier 440 as the rectifier to perform rectification. The electronic device may store correlation information between the magnitude of power and the rectifier as shown in Table 1 below.

**Table 1**

| Magnitude (W) of input power | Rectifier to perform rectification |
|---|---|
| not less than 1 W and less than 1000W | first rectifier |
| not less than 1mW and less than 1000mW | second rectifier |

The controller 460 may select a rectifier to perform rectification by referring to the correlation information as shown in Table 1. The controller 460 may control the switch 420 to connect the power receiver 410 to the selected rectifier. The controller 460 may also select a rectifier to perform rectifier by comparing the correlation information between the magnitude of the voltage of the input power and the rectifier to perform rectification with the magnitude of voltage received from the detector 450. The controller 460 may also select a rectifier to perform rectifier by comparing the correlation information between the magnitude of the current of the input power and the rectifier to perform rectification with the magnitude of current received from the detector 450.

The controller 460 may also store the information between the magnitude of power and the switch control signal as shown in Table 2 below.

**Table 2**

| Magnitude (W) of input power | Switch control signal |
|---|---|
| not less than 1 W and less than 1000 W | signal for controlling to connect to first rectifier |
| not less than 1 mW and less than 1000mW | signal for controlling to connect to second rectifier |

The controller 460 may output the switch control signal to the switch 420 by referring to the correlation information as shown in Table 2.In another example, the controller 460 may compare the correlation information between the magnitude of the voltage of the input power and the switch control signal with the magnitude of voltage received from the detector 450 and output a selected switch control signal to the switch 420. In another example, the controller 460 may compare the correlation information between the magnitude of the current of the input power and the switch control signal with the magnitude of current received from the detector 450 and output a selected switch control signal selected to the switch 420.

The controller 460 may control the switch 420 so that the selected rectifier is connected to the power receiver 410. Thus, the power output from the power receiver 410 may be transmitted to one of the plurality of rectifiers 430 and 440, and rectifier may be carried out at a relatively high efficiency. It is noted that two rectifiers is merely an example, and the electronic device may include three or more rectifiers.

The output terminals of the plurality of rectifiers 430 and 440 may be connected to the converter 470. Power rectified by one of the plurality of rectifiers 430 and 440 may be inputted to the converter 470. The converter 470 may convert the voltage to be suited for the charger 480 and output the converted voltage. The converter 470 may increase or decrease the voltage of the power inputted and output the same to the charger 480. According to an embodiment of the present disclosure, the converter 470 may be implemented to be a converter capable of both buck converting, i.e., down converting, and boost converting, i.e., up converting. The charger 480 may charge a battery (not shown) with the inputted power. Meanwhile, according to an embodiment of the present disclosure, the converter 470 may output the converted power to a power management integrated chip (PMIC), and the PMIC processes the received power to be suited for a hardware device that will receive the power.

As described above, for example, when the electronic device performs wireless charging in the electromagnetic wave scheme, and when the electronic device is positioned relatively close to the point where the RF wave is beamformed and, thus, receives a relatively large magnitude of power, the electronic device may process the received power at a relatively high efficiency using the first rectifier 430. Further, when the electronic device is positioned relatively far away from the point where the RF wave is beamformed and, thus, receives a relatively small magnitude of power, the electronic device may process the received power at a relatively high efficiency using the second rectifier 440. When the electronic device receives a relatively large magnitude of power by performing wireless charging in the resonance scheme or induction scheme, the electronic device may rectify the received power at a relatively high efficiency using the first rectifier 430. When the electronic device receives a relatively small magnitude of power by performing wireless charging in the electromagnetic wave scheme or performing energy harvesting, the electronic device may rectify the received power at a relatively high efficiency using the second rectifier 440.

The controller 460 may determine the wireless charging scheme. For example, the wireless power consortium (WPC) standard for the induction scheme or the alliance for wireless power (A4WP) standard for the resonance scheme defines a procedure for charging, and the controller 460 may determine the wireless charging scheme while performing the defined procedure. The controller 460 may select a rectifier corresponding to the determined wireless charging scheme and control the same to perform the rectification.

The controller 460 may include one or more of a CPU, an AP, or a communication processor (CP). The controller 460 may also be implemented as a micro computing unit (MCU) or minicomputer. The controller 460 may perform control on at least one of the other components of the electronic device, and/or perform an operation or data processing relating to communication. Meanwhile, the controller 460 may be implemented to include one or more processors.

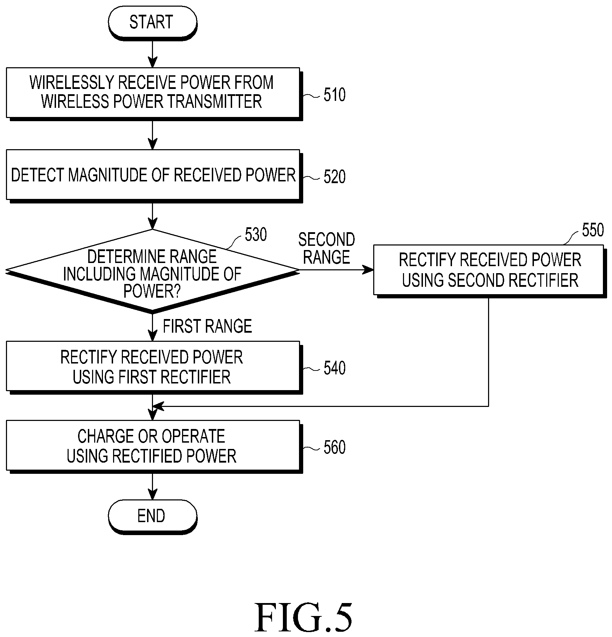

FIG. 5 is a flowchart illustrating a method for controlling an electronic device according to an embodiment of the present disclosure. Hereinafter, when the electronic device performs a particular operation, the controller performs the particular operation or the controller controls another hardware device to perform the particular operation.

Referring to FIG. 5, in operation 510, the electronic device may wirelessly receive power from a wireless power transmitter. In operation 520, the electronic device may detect the magnitude of the received power. As described above, the electronic device may detect the magnitude of the voltage or current of the received power. In operation 530, the electronic device may determine a range in which the magnitude of the received power is included. The electronic device may previously set a range of the magnitude of the power based on the efficiency of a rectifier.

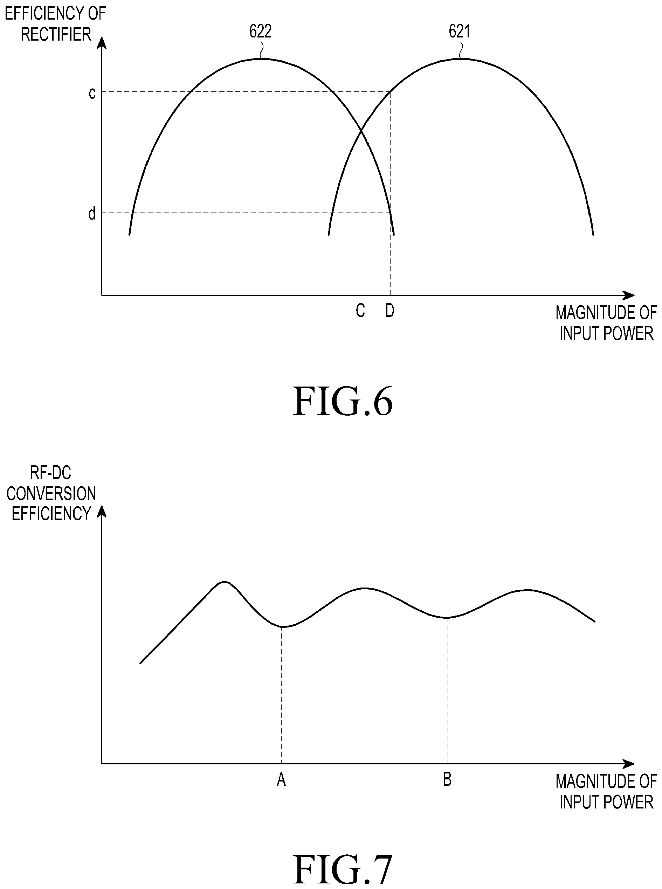

FIG. 6 illustrates graphs indicating the efficiency of rectifiers according to an embodiment of the present disclosure.

Referring to FIG. 6, for example, the efficiency 621 of the first rectifier and the efficiency 622 of the second rectifier may vary based on the magnitude of power inputted, and magnitudes of input power having the maximum efficiencies may differ from each other. The electronic device may set a magnitude range for input power with respect to the magnitude C when the efficiency 621 of the first rectifier crosses the efficiency 622 of the second rectifier. The electronic device may set a range exceeding the magnitude C as a first range and a range not more than the magnitude C as a second range. Meanwhile, even when the efficiency 621 of the first rectifier does not cross the efficiency 622 of the second rectifier, the electronic device may set the first range and the second range with respect to any point between the magnitude of power at which the efficiency 621 of the first rectifier has a maximum value and the magnitude of power at which the efficiency 622 of the second rectifier has a maximum value. Meanwhile, when there are three or more rectifiers, the electronic device may set three or more ranges based on the interval where each of the rectifiers has a relatively high efficiency as compared with the others. The electronic device may previously store the correlation information between the set ranges and the rectifier to perform rectification.

When the detected magnitude of power is within the first range, the electronic device may rectify the received power using the first rectifier in operation 540. When the detected magnitude of power is within the second range, the electronic device may rectify the received power using the second rectifier in operation 550. Accordingly, e.g., when the magnitude of input power is D, the electronic device may perform rectification at a relatively high efficiency by using the first rectifier, preventing the second rectifier from performing rectification at a relatively low efficiency, d. In operation 560, the electronic device may charge a battery with the rectified power or perform other operations.

FIG. 7 is a graph illustrating a RF-DC conversion efficiency for the magnitude of input power in an electronic device according to an embodiment of the present disclosure.

Referring to FIG. 7, the RF-DC conversion efficiency may correspond to a ratio of the magnitude of rectified (DC) power to the magnitude of power received wirelessly, e.g., through a RF wave. Referring to FIG. 7, the electronic device may include three or more rectifiers. When the magnitude of input power is less than A, the electronic device may perform rectifier using the third rectifier. Meanwhile, as described above, the efficiency of a single rectifier may vary based on the magnitude of input power. Upon determining that the magnitude of input power is not less than A and is less than B, the electronic device may perform rectification using the second rectifier. Upon determining that the magnitude of input power is not less than B, the electronic device may perform rectification using the first rectifier. Accordingly, the RF-DC conversion efficiency may have a plurality of local maximum values without a steady decrease by the increase in the magnitude of input power.

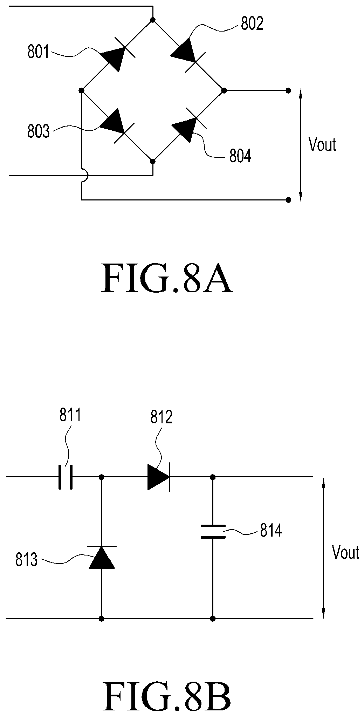

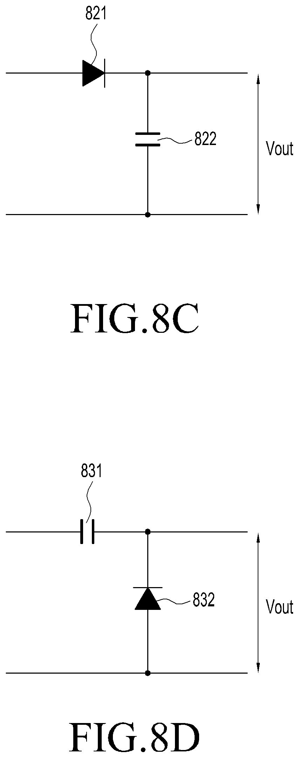

FIGS. 8A, 8B, 8C, and 8D are circuit diagrams illustrating various rectifiers according to various embodiments of the present disclosure.

Referring to FIG. 8A, a circuit diagram illustrates a rectifier capable of rectifying watt-class power at a relatively high efficiency. Referring to FIG. 8A, the rectifier may be implemented in a diode bridge including diodes 801, 802, 803, and 804 to rectify a relatively large magnitude of watt-class AC power and output DC power with a Vout output voltage.

Referring to FIG. 8B, a circuit diagram illustrates a rectifier capable of rectifying milliwatt-class power at a relatively high efficiency. Referring to FIG. 8B, the rectifier may include capacitors 811 and 814 and diodes 812 and 813. An end of the capacitor 811 may be connected to a first input terminal of the rectifier, and the other end of the capacitor 811 may be connected to the input terminal of the diode 812 and the output terminal of the diode 813. The output terminal of the diode 812 may be connected to an end of the capacitor 814 and the first output terminal of the rectifier. The other end of the capacitor 814 may be connected to the second output terminal of the rectifier, the input terminal of the diode 813, and the first input terminal of the rectifier. The rectifier of FIG. 8B may rectify a relatively small magnitude of milliwatt-class power at a relatively high efficiency and output DC power with a Vout magnitude.

Referring to FIGS. 8C and 8D, circuit diagrams of example rectifiers are illustrated for rectifying harvested low power. Referring to FIG. 8C, the rectifier may include a diode having an input terminal connected to the first input terminal of the rectifier. The output terminal of the diode 821 may be connected to an end of the capacitor 822 and the first output terminal of the rectifier. The other end of the capacitor 822 may be connected to the second output terminal of the rectifier and the second input terminal of the rectifier. Referring to FIG. 8D, the rectifier may include a capacitor 831 having an end connected to the first input terminal of the rectifier. The other end of the capacitor 831 may be connected to the output terminal of the diode 832 and the first output terminal of the rectifier. The input terminal of the diode 832 may be connected to the second input terminal of the rectifier and the second output terminal of the rectifier. Referring to FIGS. 8C and 8D, the rectifier may rectify harvested low power at a relatively high efficiency and output DC power with a Vout magnitude. Meanwhile, the circuits shown in FIGS. 8A to 8D are merely examples, and the electronic device according to an embodiment of the present disclosure may also include the rectifier having other various configurations. Further, the electronic device may use the rectifier of FIG. 8A to rectify milliwatt-class power or harvested power, the rectifier of FIG. 8B to rectify watt-class power or harvested power, and the rectifier of FIG. 8C or 8D to rectify watt-class power or milliwatt-class power.

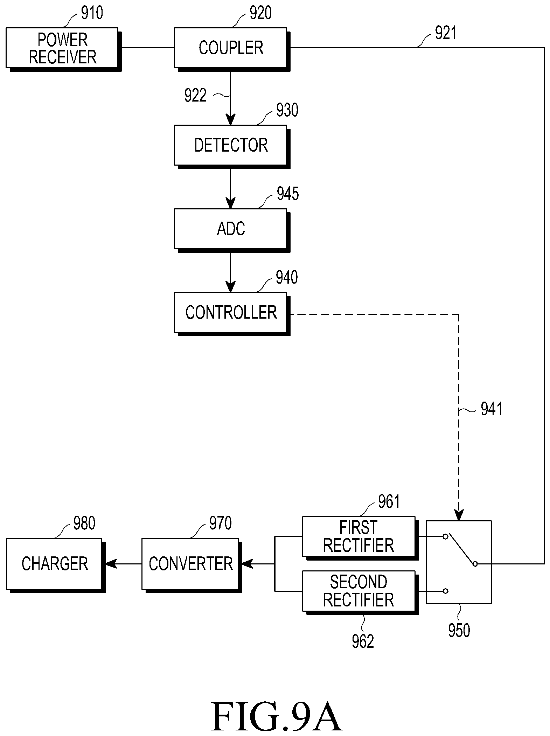

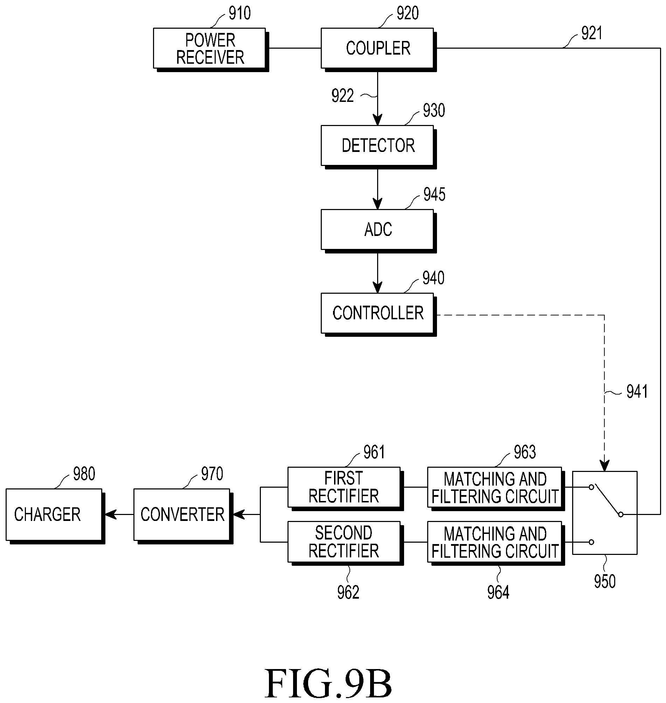

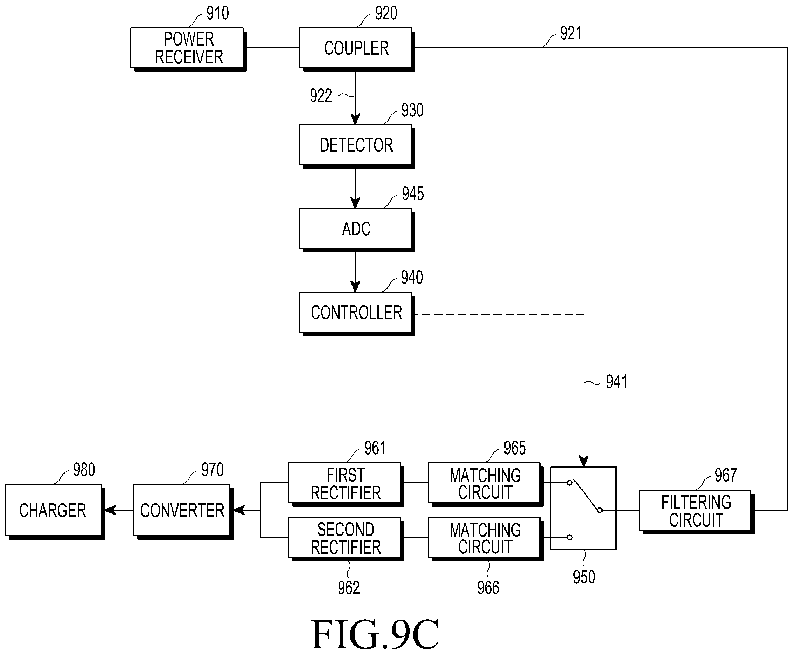

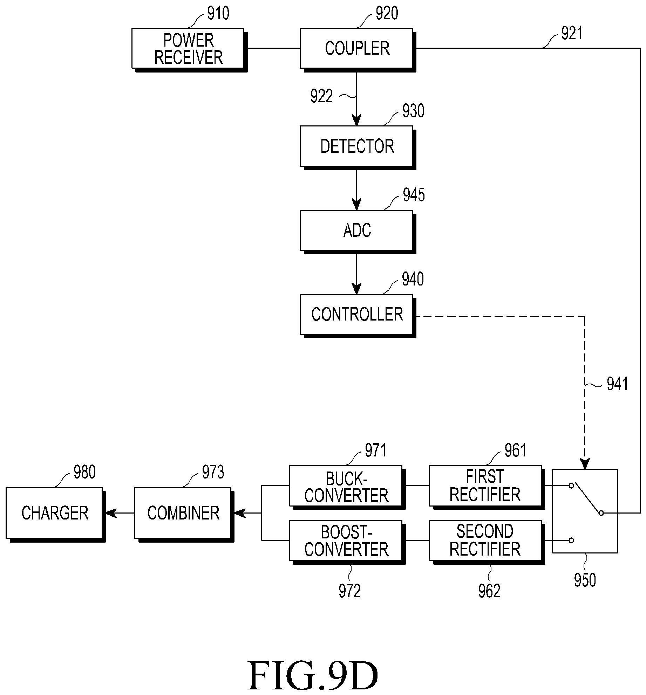

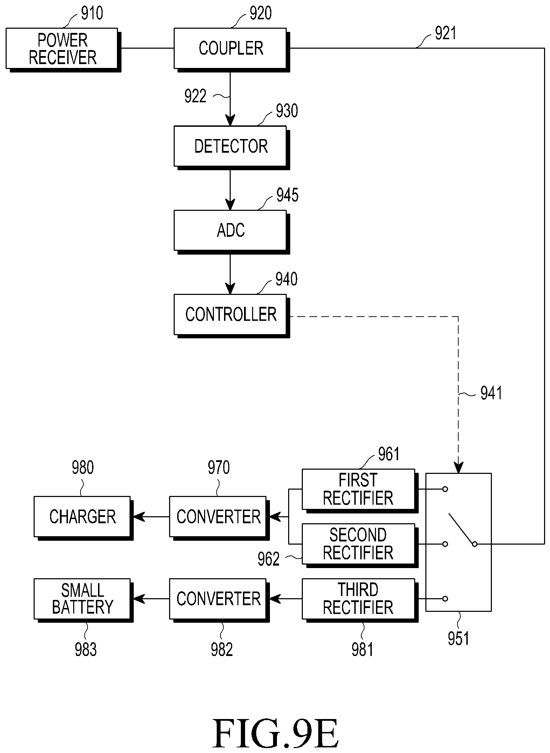

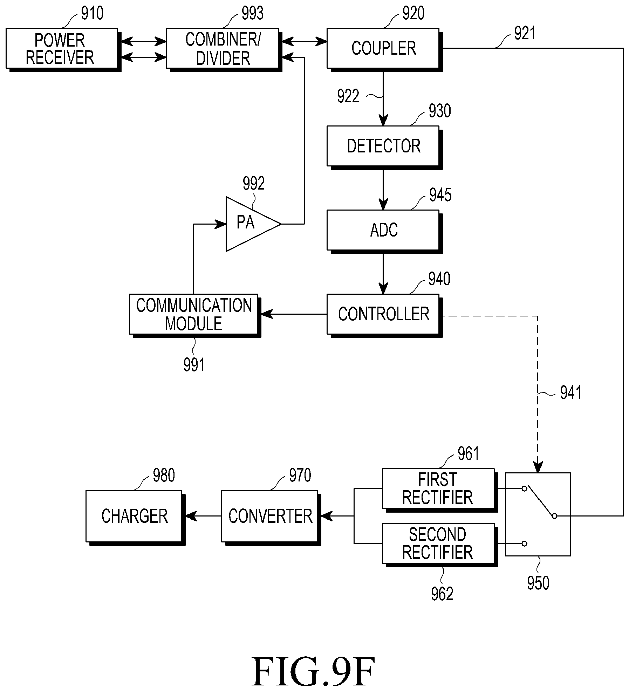

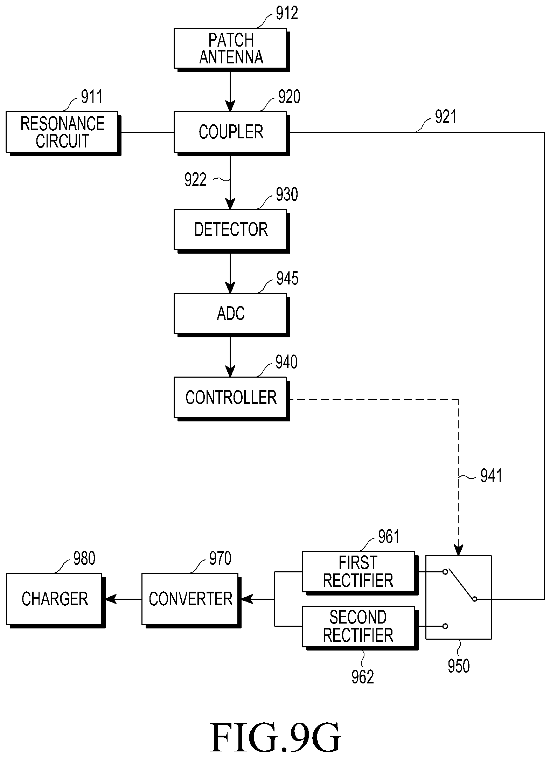

FIGS. 9A, 9B, 9C, 9D, 9E, 9F, and 9G are block diagrams illustrating electronic devices according to various embodiments of the present disclosure.

Referring to FIG. 9A, the electronic device may include a power receiver 910, a coupler 920, a detector 930, a controller 940, an analog-to-digital converter (ADC) 945, a switch 950, a first rectifier 961, a second rectifier 962, a converter 970, and a charger 980.

The power receiver 910 may wirelessly receive power from a wireless power transmitter. As h described above, the power receiver 910 may wirelessly receive power by at least one of various schemes, such as an induction scheme, a resonance scheme, or an electromagnetic wave scheme and may include a receiving circuit for at least one of various schemes, such as the induction scheme, the resonance scheme, or the electromagnetic wave scheme.

The power receiver 910 may transmit the received power to the coupler 920. The coupler 920 may separately output the received power to a first path 921 and a second path 922. For example, the first path 921 may be used for supplying power, and the second path 922 may be used for detecting the magnitude of power. Accordingly, the coupler 920 may provide a majority of power to the first path 921. The coupler 920 may include the second path 922 that is physically separated from the first path 921 from, e.g., the power receiver 910. As the second path 922 is coupled with the first path 921, part of the power may be provided to the second path 922. It may readily be appreciated by one of ordinary skill in the art that the coupler 920 may be implemented in, e.g., a 1M810 model, but is not limited to a particular element as long as such element may enable part of the power provided to the first path 921 to be provided to the second path 922.

The detector 930 may detect the magnitude of power output through the second path 922. The detector 930 may detect the magnitude of the voltage or the current that is provided through, e.g., the second path 922. In another example, the detector 930 may rectify AC power provided through the second path 922 into DC power and deliver the rectified power to the ADC 945. The ADC 945 may convert the magnitude into a digital value and provide the digital value to the controller 940. According to an embodiment of the present disclosure, such an implementation may also be made that the magnitude of a voltage or current that is detected by the detector 930 is output as a digital value, thereby not requiring the ADC 945 to be implemented. According to an embodiment of the present disclosure, such an implementation may also be implemented when the controller 940 includes the ADC.

The controller 940 may select a rectifier to perform rectification of the first rectifier 961 or the second rectifier 962 using the magnitude of power obtained through the detector 930 and the ADC 945. For example, the controller 940 may compare the correlation information as shown in Table 1 or 2 with the digital value and select a rectifier to perform rectification based on the result of the comparison. Meanwhile, the correlation information as shown in Table 1 or 2 may be defined with respect to the magnitude of power provided to the second path 922 by the coupler 920.

The controller 940 may output a switch control signal 941 to control the switch 950 so that the selected rectifier is connected to the first path 921. Accordingly, one of the plurality of rectifiers 961 and 962 may perform rectification. The converter 970 may convert the rectified power provided from one of the plurality of rectifiers 961 and 962 and deliver the converted power to the charger 980. The charger 980 may charge a battery (not shown) with the converted power.

Referring to FIG. 9B an electronic device may further include matching and filtering circuits 963 and 964. The first matching and filtering circuit 963 may include an element for impedance matching on the first rectifier 961 and filter out harmonic components in the power. The second matching and filtering circuit 964 may include an element for impedance matching on the second rectifier 962 and filter out harmonic components in the power.

Referring to FIG. 9C an electronic device may further include matching circuits 965 and 966 and a filtering circuit 967. The first matching circuit 965 may include an element for impedance matching for the first rectifier 961. The second matching circuit 966 may include an element for impedance matching for the second rectifier 962. The filtering circuit 967 may filter out harmonic components in the power provided from the first path 921.

Referring to FIG. 9D, an electronic device may further include a buck-converter 971, a boost-converter 972, and a combiner 973 while excluding the converter 970. For example, the first rectifier 961 may be used to rectify a relatively large magnitude of power, and the second rectifier 962 may be used to rectify a relatively small magnitude of power. In this case, the voltage of the power output from the first rectifier 961 may be larger than a voltage required by the charger 980. Accordingly, the buck-converter 971 may reduce the voltage of the power that is output from the first rectifier 961, i.e., decrease the output power, and output the same to the combiner 973. Meanwhile, the voltage of the power that is output from the second rectifier 962 may be smaller than a voltage required by the charger 980. Accordingly, the boost-converter 972 may increase the voltage of the power output from the second rectifier 962, i.e., amplify the output power, and output the same to the combiner 973. The combiner 973 may deliver the received power to the charger 980.

Referring to FIG. 9E an electronic device may further include a third rectifier 981, a converter 982, and a small battery 983. The electronic device illustrated in FIG. 9E may further include a switch 951 capable of connecting the first path 921 to any one of the first rectifier 961, the second rectifier 962, or the third rectifier 981. For example, the first rectifier 961 may rectify watt-class power at a relatively high efficiency, and the second rectifier 962 may rectify milliwatt-class power at a relatively high efficiency. The third rectifier 981 may be set to rectify a relatively small magnitude of harvested power at a relatively high efficiency. For example, the power receiver 910 may include a Wi-Fi signal harvesting circuit. The Wi-Fi harvesting circuit may receive power by a Wi-Fi signal, and the harvested power may have a smaller magnitude than power received by other wireless charging schemes. The controller 940 may select the third rectifier 981 as a rectifier to perform rectification based on the magnitude of the power received by the power receiver 910 or the magnitude of the power measured at the second path 922. The controller 940 may control the switch 951 so that the first path 921 is connected to the third rectifier 981. For example, the controller 940 may output a switch control signal 941 to the switch 951. Thus, the third rectifier 981 may perform rectification, and the rectified power may be provided to the converter 982. The converter 982 may convert the rectified power and store the same in the small battery 983. For example, the small battery 983 may store and provide power for the operation of the elements shown in FIG. 9E for wirelessly receiving power.

Referring to FIG. 9F an electronic device may further include a communication module 991, a power amplifier (PA) 992, and a combiner/divider 993.

The controller 940 may deliver information about the magnitude of power received to the communication module 991. The communication module 991 may generate a communication signal based on various communication schemes using the received information about the magnitude of the power and deliver the generated communication signal to the PA 992. The PA 992 may provide the received communication signal to the combiner/divider 993. The combiner/divider 993 may provide the received communication signal to the power receiver 910. The power receiver 910 may generate an electromagnetic wave using the received communication signal, and the wireless power transmitter may identify the information about the magnitude of power received from the electronic device by receiving the electromagnetic wave from the power receiver 910. When power is received from the power receiver 910, the combiner/divider 993 may provide the received power to the coupler 920, and when the signal is received from the PA 992, the combiner/divider 993 may deliver the signal to the power receiver 910. According to an embodiment of the present disclosure, the combiner/divider 993 may simultaneously perform bi-lateral delivery of the received power and the signal for communication.

Referring to FIG. 9G, an electronic device may include a power receiving circuit for multiple charging schemes. For example, the electronic device may include a resonance circuit 911 capable of wirelessly receiving power based on, e.g., the resonance scheme and a patch antenna 912 capable of wirelessly receiving power based on the electromagnetic wave scheme. Meanwhile, the combination of the above-described resonance circuit 911 and the patch antenna 912 is merely an example, and according to an embodiment of the present disclosure, the electronic device may be implemented to include a plurality of receiving circuits according to various wireless charging schemes.

The magnitude of power received by the resonance circuit 911 may be larger than the magnitude of power received by the patch antenna 912. In this case, the controller 940 may select the first rectifier 961 to rectify a relatively large magnitude of power based on the magnitude of the received power or the magnitude of the power detected at the second path 922. Meanwhile, the magnitude of the power received by the patch antenna 912 may be relatively small. In this case, the controller 940 may select the second rectifier 962 to rectify a relatively small magnitude of power based on the magnitude of the received power or the magnitude of the power detected at the second path 922. According to an embodiment of the present disclosure, the controller 940 may identify a wireless charging scheme and perform control to perform rectification using a rectifier corresponding to the identified wireless charging scheme. For example, the first rectifier 961 may previously be set to be the rectifier corresponding to the resonance scheme, and the second rectifier 962 may previously be set to be the rectifier corresponding to the electromagnetic wave scheme. The controller 940 may also be operated in such a manner as to select a rectifier corresponding to the identified wireless charging scheme, without using the process of measuring the magnitude of the power. For example, the controller 940 may determine that the wireless charging scheme is performed in one of the induction scheme, the resonance scheme, or the RF scheme. The controller 940 may determine a rectifier to perform rectification of the power based on the charging scheme.

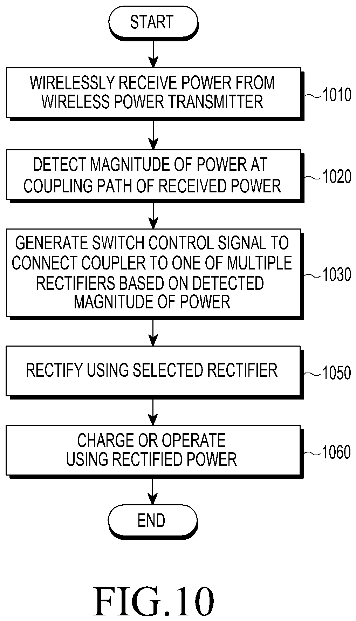

FIG. 10 is a flowchart illustrating a method for controlling an electronic device according to an embodiment of the present disclosure.

Referring to FIG. 10, in operation 1010, the electronic device may wirelessly receive power from a wireless power transmitter. In operation 1020, the electronic device may detect the magnitude of power at a coupling path of the power received, e.g., the second path 922 illustrated in FIG. 9A. For example, the electronic device may convert the detected magnitude of power into a digital signal.

In operation 1030, the electronic device may select one of a plurality of rectifiers to perform rectification based on the detected magnitude of power and generate a switch control signal to enable the selected rectifier to connect with the coupler. In operation 1050, the electronic device may rectify the received power using the selected rectifier. In operation 1060, the electronic device may perform charging or other operations using the rectified power.

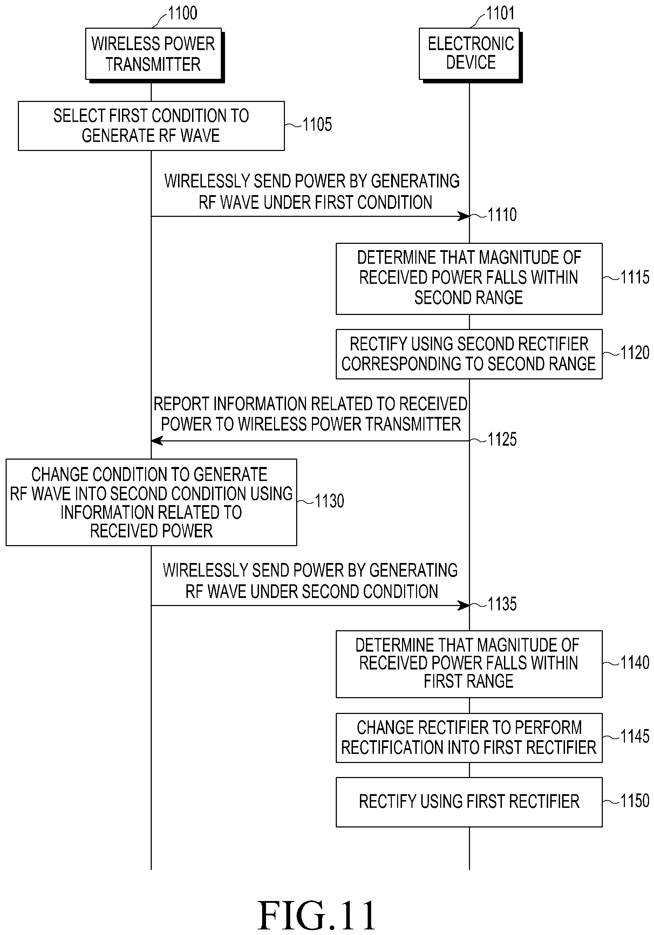

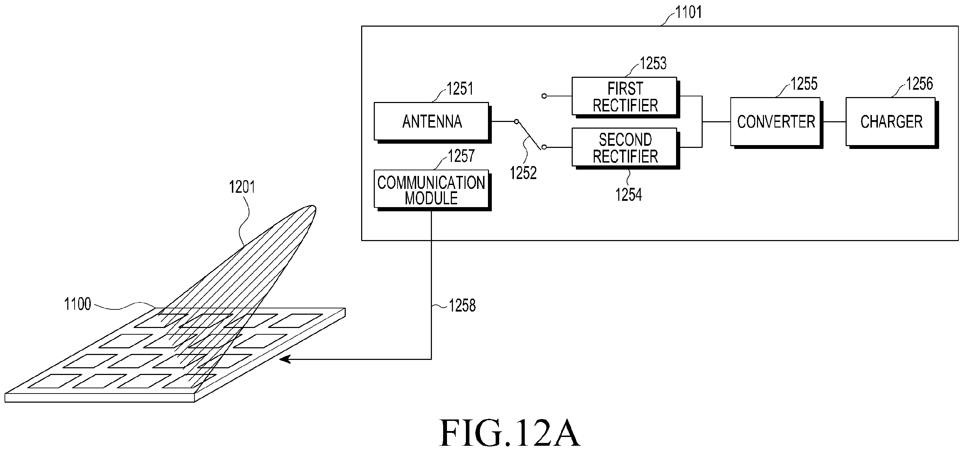

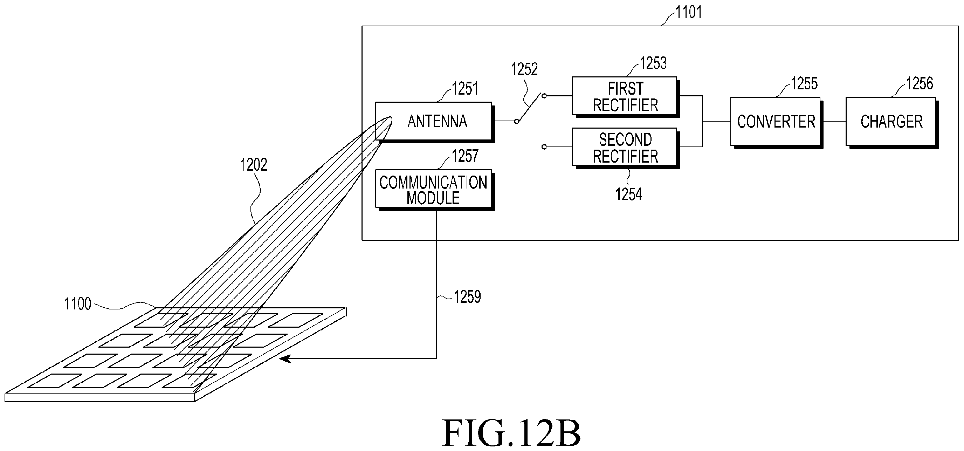

FIG. 11 is a flowchart illustrating operations of a wireless power transmitter and an electronic device according to an embodiment of the present disclosure. FIGS. 12A and 12B are views illustrating formation of a RF wave by a wireless power transmitter according to an embodiment of the present disclosure.

Referring to FIGS. 11, 12A and 12B, in operation 1105, the wireless power transmitter 1100 may select a first condition to form a RF wave 1201 as shown in FIG. 12A. The wireless power transmitter 1100 may select, as the first condition, the amplitude and phase of an electrical signal inputted to each of patch antennas capable of beamforming the RF wave 1201. In operation 1110, the wireless power transmitter 1100 may generate the RF wave 1201 under the first condition, so that the wireless power transmitter 1100 may wirelessly send power. The antenna 1251 may wirelessly receive power by outputting an electrical signal using the RF wave 1201.

In operation 1115, the electronic device 1101 may determine that the magnitude of the power received is within a second range. Here, the second range may be a range indicating a relatively low magnitude of power. As shown in FIG. 12A, the electronic device 1101 may be located relatively far away from the point when the generated RF wave 1201 is beamformed. Accordingly, the electronic device 1101 may receive a relatively low magnitude of power. In operation 1120, the electronic device 1101 may control the switch 1252 to perform rectification through the second rectifier 1254 corresponding to the second range. The converter 1255 may convert the rectified power, and the charger 1256 may charge the battery with the converted power.

In operation 1125, the electronic device 1101 may control the communication module 1257 to send a communication signal 1258 for reporting information related to the received power to the wireless power transmitter. In operation 1130, the wireless power transmitter 1100 may change the condition for generating a RF wave into a second condition using the information related to the received power. The wireless power transmitter 1100 may determine that the power received by the electronic device 1101 is relatively low and may thus change the condition for generating a RF wave, i.e., at least one of the amplitude and phase inputted to each of the patch antennas. In operation 1135, the wireless power transmitter 1100 may generate a RF wave 1202 under the second condition as shown in FIG. 12B, so that the wireless power transmitter 1100 may wirelessly send power. Although FIGS. 12A and 12B illustrate that the RF wave 1202 is beamformed at the point when the electronic device 1101 is positioned by one change in condition by the wireless power transmitter 1100, this is merely for description purposes. The wireless power transmitter 1100 may change the condition for generating a RF wave stepwise two or more times or may change the condition for generating a RF wave until the information related to the received power, which is contained in the feedback communication signal, meets a preset condition.

In operation 1140, the electronic device 1101 may determine that the magnitude of the power received is within the first range. In operation 1145, the electronic device 1101 may control the switch 1252 to change the rectifier to perform rectification into the first rectifier 1253 as shown in FIG. 12B. In operation 1150, the electronic device 1101 may perform rectification using the first rectifier 1253. Meanwhile, the electronic device 1101 may send a communication signal 1259 containing the information related to the received power to the wireless power transmitter 1100. The wireless power transmitter 1100 may determine that the electronic device 1101 receives a sufficiently large magnitude of power and may thus keep on generating the RF wave 1202.

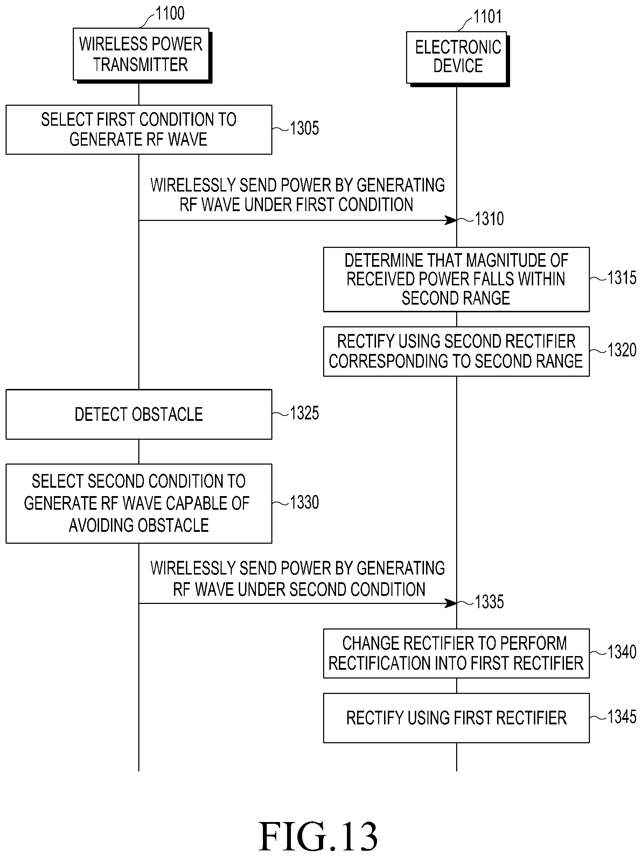

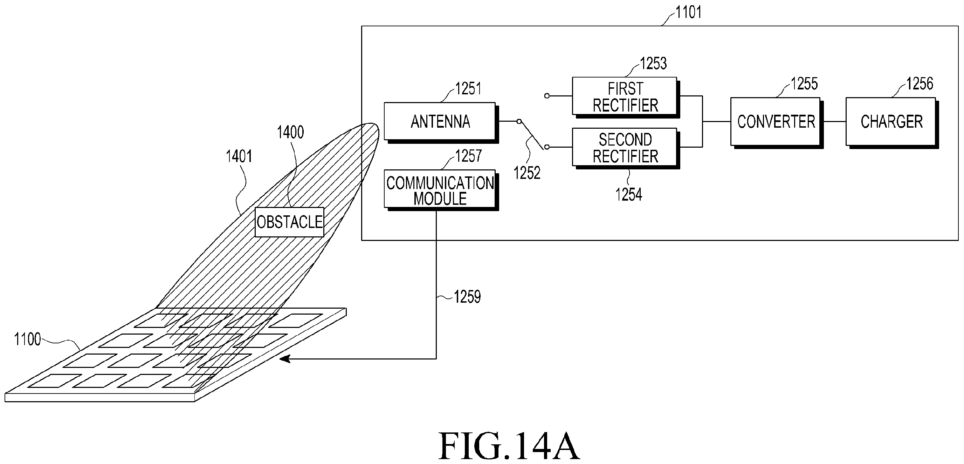

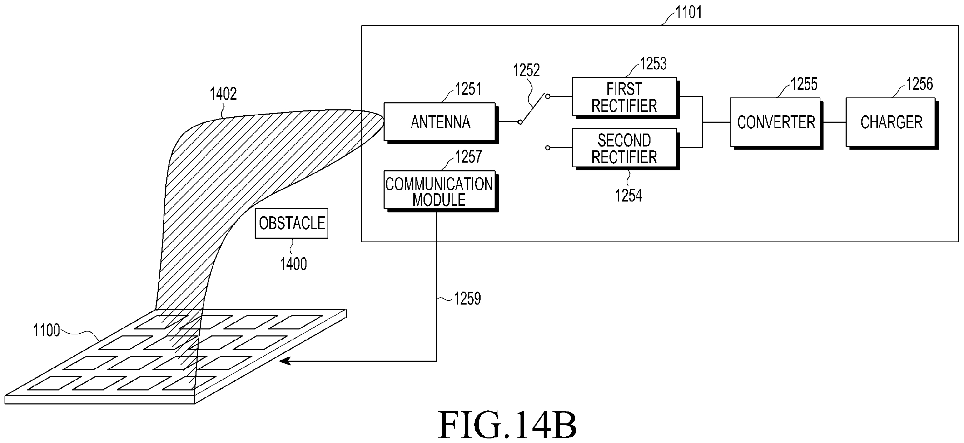

FIG. 13 is a flowchart illustrating operations of an electronic device and a wireless power transmitter according to an embodiment of the present disclosure. The embodiment of FIG. 13 is described in further detail with reference to FIGS. 14A and 14B.

FIGS. 14A and 14B are views illustrating the formation of a RF wave by a wireless power transmitter according to an embodiment of the present disclosure.

Referring to FIG. 13, in operation 1305, the wireless power transmitter 1100 may select a first condition to form a RF wave 1401 as shown in FIG. 14A. In operation 1310, the wireless power transmitter 1100 may generate the RF wave 1401 under the first condition, so that the wireless power transmitter 1100 may wirelessly send power. In operation 1315, the electronic device 1101 may determine that the magnitude of the power received is within a second range, e.g., a relatively small magnitude of power range. Referring to FIG. 14A, an obstacle may be positioned between the wireless power transmitter 1100 and the electronic device 1101. The electronic device 1101 may fail to receive a sufficient magnitude of power due to the obstacle 1400. Thus, the electronic device 1101 may determine that the magnitude of power received is within the second range. In operation 1320, the electronic device 1101 may control the switch 1252 to perform rectification through the second rectifier 1254 corresponding to the second range.

In operation 1325, the wireless power transmitter 1100 may detect the obstacle 1400. A method for detecting the obstacle 1400 by the wireless power transmitter 1100 is described below in greater detail. In operation 1330, e.g., as shown in FIG. 14B, the wireless power transmitter 1100 may select a second condition to generate a RF wave 1402 capable of avoiding the obstacle 1400. In operation 1335, the wireless power transmitter 1100 may generate the RF wave 1402 under the second condition, so that the wireless power transmitter 1100 may wirelessly send power. The RF wave 1402 may be reflected to the antenna 1251 by an indoor wall or other structure. In operation 1340, the electronic device 1101 may determine that the magnitude of the received power is within the first range, i.e., a relatively large range, and may change the rectifier to perform rectification into the first rectifier 1253. In operation 1345, the wireless power transmitter 1100 may perform rectification using the first rectifier 1253.

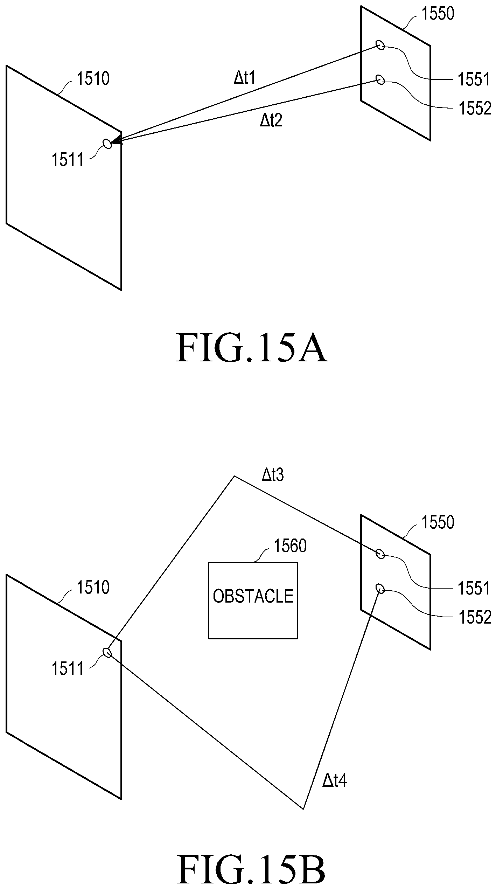

FIGS. 15A and 15B are views illustrating a method for detecting an obstacle according to an embodiment of the present disclosure.

Referring to FIGS. 15A and 15B, the wireless power transmitter 1510 may include a communication antenna 1511. The electronic device 1550 may include a plurality of communication antennas 1551 and 1552. A first time Δt1 may be required until a first communication signal sent out by the communication antenna 1551 is received by the communication antenna 1511. A second time Δt2 may be required until a second communication signal sent out by the communication antenna 1552 is received by the communication antenna 1511. Unless an obstacle is positioned between the electronic device 1550 and the wireless power transmitter 1510, a difference between the first time Δt1 and the second time Δt2 is of less significance. On the other hand, an obstacle 1560 may be positioned between the wireless power transmitter 1510 and the electronic device 1550 as illustrated in FIG. 15B. In such case, communication signals may be received by the communication antenna 1511 by getting around the obstacle 1560. Thus, a third time Δt3 may be required until the first communication signal sent out by the communication antenna 1551 is received by the communication antenna 1511. A fourth time Δt4 may be required until the second communication signal sent out by the communication antenna 1552 is received by the communication antenna 1511. In this case, a difference between the third time Δt3 and the fourth time Δt4 may be relatively large. This is attributed to a difference in path between the first communication signal and the second communication signal. As a result, upon determining that a gap in time of reception between the first communication signal and the second communication signal is larger than a preset threshold, the wireless power transmitter 1510 may determine that the obstacle 1560 is positioned between the electronic device 1550 and the wireless power transmitter 1510.

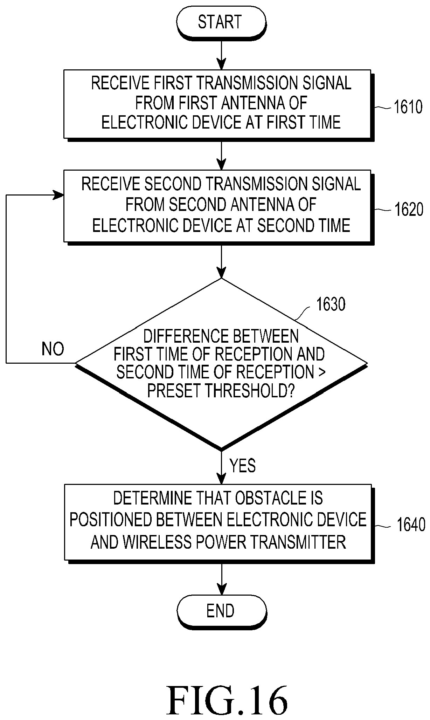

FIG. 16 is a flowchart illustrating a method for detecting an obstacle according to an embodiment of the present disclosure.

Referring to FIG. 16, in operation 1610, the wireless power transmitter may receive a first transmit signal from a first antenna of the electronic device at a first time. In operation 1620, the wireless power transmitter may receive a second transmit signal from a second antenna of the electronic device at a second time. According to an embodiment of the present disclosure, the electronic device may be configured to first send out the first transmit signal through the first antenna, and a preset time after, the second transmit signal through the second antenna. The wireless power transmitter may previously store the preset time. The first transmit signal and the second transmit signal, respectively, may include identification information indicating that they, respectively, have been sent out from the first antenna and the second antenna.

In operation 1630, the wireless power transmitter may determine whether a difference between the first time of reception and the second time of reception exceeds a preset threshold. As described above in connection with FIGS. 15A and 15B, when no obstacle is present, the difference between the first time of reception and the second time of reception might be of little difference from the preset time. In other words, when no obstacle is present, the first transmit signal and the second transmit signal may be received at substantially the same time. The preset threshold may be obtained by adding, to the preset time, a value allowing the first transmit signal and the second transmit signal to be determined to have been received at substantially the same time.

Upon determining that the difference between the first time of reception and the second time of reception exceeds the preset threshold, the wireless power transmitter, in operation 1640, may determine that an obstacle is positioned between the electronic device and the wireless power transmitter. Upon determining that the difference between the first time of reception and the second time of reception does not exceed the preset threshold, the wireless power transmitter may determine that no obstacle is positioned between the electronic device and the wireless power transmitter.

Meanwhile, according to an embodiment of the present disclosure, the wireless power transmitter may also determine the presence or absence of an obstacle by determining the time of flight (TOF) of each communication signal. According to an embodiment of the present disclosure, the communication signal may include a time stamp for the time of transmission. Accordingly, a first communication signal may include a time stamp for the time of transmission of the first communication signal, and the second communication signal may include a time stamp for the time of transmission of the second communication signal. The wireless power transmitter may compare the time of reception with the time of transmission of the first communication signal to determine a first TOF of the first communication signal, and the wireless power transmitter may compare the time of reception with the time of transmission of the second communication signal to determine a second TOF of the second communication signal. Referring to FIGS. 15A and 15B, when no obstacle is present, the first TOF may be substantially the same as the second TOF. Accordingly, the wireless power transmitter may determine whether there is an obstacle using a difference between the first TOF and the second TOF.

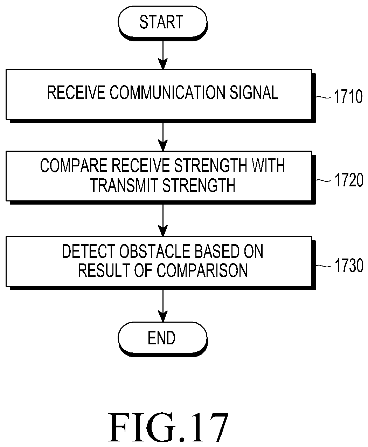

FIG. 17 is a flowchart illustrating a method for controlling a wireless power transmitter according to an embodiment of the present disclosure.

Referring to FIG. 17, in operation 1710, the wireless power transmitter may receive a communication signal containing a transmit strength from the electronic device. The transmit strength may indicate the magnitude of the communication signal that the electronic device sends. In other words, the electronic device sends, to the wireless power transmitter, the communication signal containing the magnitude of the communication signal that is sent to the wireless power transmitter. In operation 1720, the wireless power transmitter may receive the communication signal and compare the received strength of the communication signal with the transmit strength of the communication signal. The wireless power transmitter may measure the received strength of the communication signal and may compare the measured received strength with the transmit strength contained in the communication signal, thereby determining the attenuation of the transmitted signal.

In operation 1730, the wireless power transmitter may determine whether an obstacle is present based on the result of the comparison (i.e., the attenuation amount). When an obstacle is present, the communication signal may be absorbed by the obstacle or delivered to the wireless power transmitter via an indirect path to avoid the obstacle, thereby increasing the attenuation. Thus, the wireless power transmitter, upon determining that the attenuation exceeds a threshold, may determine that the obstacle is present. Accordingly, the wireless power transmitter may determine the direction in which the communication signal is received and may determine the direction in which the obstacle is positioned.

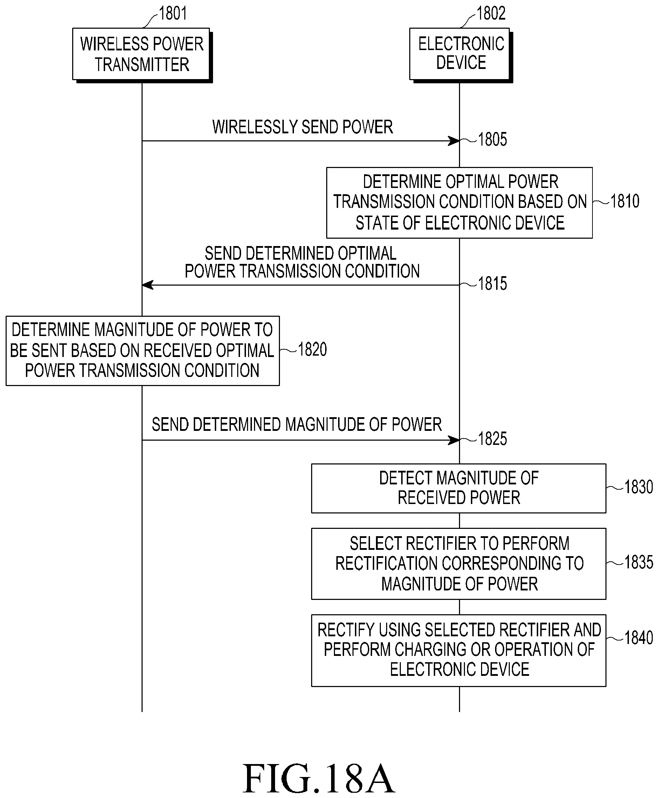

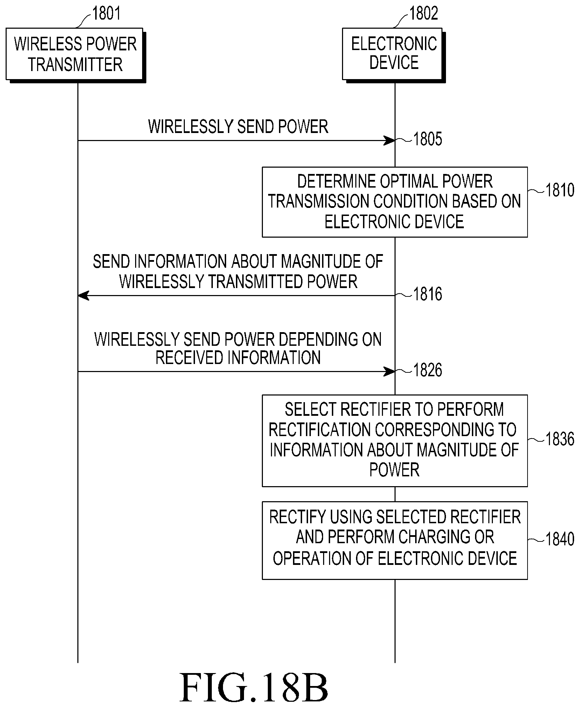

FIGS. 18A and 18B are flowcharts illustrating operations of a wireless power transmitter and an electronic device according to an embodiment of the present disclosure.

Referring to FIG. 18A, the wireless power transmitter 1801 may transmit wireless power to the electronic device 1802 in operation 1805. For example, the wireless power transmitter 1801 may wirelessly transmit a preset magnitude of power corresponding to the electronic device 1802. Meanwhile, operation 1805 may be omitted when the wireless power transmitter 1801 performs a subscription procedure for the electronic device 1802 or remains in a state when it waits for power transmission.

In operation 1810, the electronic device 1802 may determine the optimal power transmission condition based on the state of the electronic device 1802. For example, the electronic device 1802 may determine the optimal power transmission condition based on the remaining power of its battery, the state of execution of an application, or the temperature of the electronic device. The power transmission condition may include at least one of the magnitude of power that the wireless power transmitter 1801 sends or the time of the power transmission. In other words, the electronic device 1802 may determine at least one of the optimal magnitude of power that the wireless power transmitter 1801 is to transmit and the optimal transmission time based on, e.g., the remaining battery power, the state of execution of an application, or the temperature of the electronic device. According to an embodiment of the present disclosure, the electronic device 1802 may determine that the state of execution of an application is a state in which a call application is executing. The electronic device 1802 may determine a power transmission condition based on when the call application is executing. For example, when the call application is being used, the electronic device 1802 may previously store a relatively small magnitude of power as the optimal power transmission condition. Accordingly, the electronic device 1802 may determine the optimal power transmission condition corresponding to the state of the electronic device while the call application is being used. According to an embodiment of the present disclosure, the electronic device 1802 may determine that the state of execution of an application is a state in which an application that generates heat, e.g., a game application, is running. The electronic device 1802 may determine the optimal power transmission condition corresponding to the state of the electronic device while executing the corresponding application. According to an embodiment of the present disclosure, the electronic device 1802 may directly measure the temperature of the electronic device and determine the optimal power transmission condition corresponding to the measured temperature. According to an embodiment of the present disclosure, the electronic device 1802 may determine the optimal power transmission condition corresponding to the remaining battery power.

In operation 1815, the electronic device 1802 may send the determined optimal power transmission condition to the wireless power transmitter 1801. In operation 1820, the wireless power transmitter 1801 may determine the magnitude of power to be sent according to the received optimal power transmission condition. The wireless power transmitter 1801 may also determine the time of power transmission according to the received optimal power transmission condition. In operation 1825, the wireless power transmitter 1801 may send the determined magnitude of power. The wireless power transmitter 1801 may also send power at the determined time of transmission. In operation 1830, the electronic device 1802 may detect the magnitude of the received power. In operation 1835, the electronic device 1802 may select a rectifier to perform rectification corresponding to the magnitude of power. In operation 1840, the electronic device 1802 may perform rectification using the selected rectifier and charge the battery or perform other operations using the rectified power. The process in which the electronic device 1802 detects the magnitude of the received power and selects a rectifier to perform rectification corresponding thereto in operations 1830 to 1840 has already been described, and no further detailed description thereof is given below.

FIG. 18B is a flowchart illustrating operations of a wireless power transmitter and an electronic device according to an embodiment of the present disclosure.

Referring to FIG. 18B, descriptions of operations illustrated in this example have been described above in connection with FIG. 18A and, therefore, the descriptions of these operations are omitted.

In operation 1816, the electronic device 1802 may send information about the magnitude of power that is wirelessly sent. The electronic device 1802 may send information about the magnitude of power corresponding to the determined optimal power transmission condition to the wireless power transmitter 1801 in operation 1826. In operation 1836, the electronic device 1802 may select a rectifier to perform rectification corresponding to the information about the magnitude of power. In other words, the electronic device 1802 may select a rectifier to perform rectification based on the information about the magnitude of power that the electronic device 1802 has determined on its own, rather than detecting the magnitude of the received power.

Further, when the state of the electronic device 1802 is changed, the electronic device 1802 may change the optimal power transmission condition according to the changed state. The electronic device 1802 may send, to the wireless power transmitter 1801, the changed optimal power transmission condition or information about the magnitude of power corresponding to the changed optimal power transmission condition. Thus, the electronic device 1802 may receive power corresponding to the changed state of the electronic device. The electronic device 1802 may also change the rectifier to perform rectification as the received power is changed. For example, the electronic device 1802 may detect the magnitude of power received and change the rectifier to perform rectification according to the change in the detected magnitude of power. Or, the electronic device 1802 may also change the rectifier to perform rectification corresponding to the changed state of the electronic device. Meanwhile, the wireless power transmitter 1801 may send power to a plurality of electronic devices and may send magnitudes of power, which differ depending on the state of the electronic devices, to the electronic devices, respectively.

According to an embodiment of the present disclosure, there is provided a storage medium storing commands configured to be executed by at least one processor to enable the at least one processor to perform at least one operation that includes wirelessly receiving power from a wireless power transmitter, detecting a magnitude of the received power and selecting a rectifier to perform rectification from among a plurality of rectifiers included in the electronic device based at least in part on the magnitude of the power, and rectifying the received power using the selected rectifier.

The above-described commands may be stored in an external server and may be downloaded and installed on an electronic device, such as a wireless power transmitter. In other words, according to an embodiment of the present disclosure, the external server may store commands that are downloadable by the wireless power transmitter.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. An electronic device comprising:
a power receiver circuit configured to wirelessly receive power from a wireless power transmitter;
a plurality of rectifiers; and
a processor configured to:
detect a magnitude of the received power,
select a rectifier to perform rectification from among the plurality of rectifiers based on the magnitude of the received power, and
control the selected rectifier to rectify the power.

2. The electronic device of claim 1, wherein the processor is further configured to:
select a range including the magnitude of the received power from among a plurality of preset ranges, and
identify the selected rectifier based on the selected range.

3. The electronic device of claim 2,
wherein a first rectifier is selected when the magnitude of the received power is within a first range from 1W to 1000W , and
wherein a second rectifier is selected when the magnitude of the received power is within a second range from 1mW to 1000mW.

4. The electronic device of claim 3,
wherein the power receiver circuit includes a harvesting circuit harvesting power by a Wi-Fi signal, and
wherein when the magnitude of the received power corresponds to a magnitude obtained by harvesting the power by the Wi-Fi signal, the processor is further configured to select a third rectifier as the rectifier to perform rectification.

5. The electronic device of claim 1, wherein the power receiver circuit includes:
a first power receiving circuit configured to wirelessly receive the power in a first wireless charging scheme, and
a second power receiving circuit configured to wirelessly receive the power in a second wireless charging scheme.

6. The electronic device of claim 5, wherein the processor is further configured to:
select the first rectifier to perform rectification when the power is provided from the first power receiving circuit, and
select the second rectifier to perform rectification when the power is provided from the second power receiving circuit.

7. The electronic device of claim 1, wherein the processor further configured to:
compare previously stored correlation information between a magnitude of input power and a corresponding rectifier with the magnitude of the received power, and
identify the selected rectifier based on a result of the comparison.

8. The electronic device of claim 1, further comprising a switch connecting the power receiver circuit to one of the plurality of rectifiers,
wherein the processor is further configured to control the switch to connect the power receiver circuit to the selected rectifier.

9. The electronic device of claim 1, further comprising:
a detector configured to detect the magnitude of the received power, and
a coupler configured to:
receive the power from the power receiver,
provide a first portion of the power to the selected rectifier through a first path, and
provide a second portion of the power to the detector through a second path.

10. The electronic device of claim 1, further comprising a transceiver configured to:
receive information related to the magnitude of the received power from the processor, and
generate a communication signal including the information,
wherein the power receiver circuit is further configured to transmit the communication signal the wireless power transmitter.

11. The electronic device of claim 1, further comprising a transceiver, wherein the processor is further configured to:
determine an optimal power transmission condition from the wireless power transmitter based on at least one of remaining power of a battery of the electronic device, application use information of the electronic device, or a temperature of the electronic device, and
control the transceiver to transmit the optimal power transmission condition to the wireless power transmitter.

12. A method for controlling an electronic device, the method comprising:
wirelessly receiving power from a wireless power transmitter;
detecting a magnitude of the received power;
selecting a rectifier to perform rectification from among a plurality of rectifiers based at least in part on the magnitude of the received power; and
rectifying the power using the selected rectifier.

13. The method of claim 12, wherein the selecting of the rectifier to perform rectification includes:
selecting a range including the magnitude of the received power from among a plurality of preset ranges, and
identifying the selected rectifier based on the selected range.

14. The method of claim 12, wherein the power is received in a first wireless charging scheme or a second wireless charging scheme.

15. The method of claim 14, wherein the selecting of the rectifier to perform rectification includes:
when the power is received in the first wireless charging scheme, selecting a first rectifier of the plurality of rectifiers, and
